# EUROPEAN PATENT APPLICATION

(11) **EP 4 495 659 A1**
(43) Date of publication of application: **22.01.2025**
(21) Application number: 23770465.5
(22) Date of filing: 03.03.2023
(51) Int. Cl.: G02B 27/01, B60K 35/00, G09F 9/00

(54) **IMAGE PROJECTION DEVICE**

(30) Priority: 16.03.2022 JP 2022041945
(71) Applicant: KOITO MANUFACTURING CO., LTD., Minato-ku, Tokyo, 108-8711 (JP)
(72) Inventor: TOYOSHIMA, Takanobu, Shizuoka-shi, Shizuoka 424-8764 (JP)
(74) Representative: Zimmermann, Tankred Klaus
(86) International application number: PCT/JP2023/008022
(87) International publication number: WO 2023/176508

(57) **Abstract**

Provided is an image projection device configured so that even when a plurality of images is emitted to different areas of a display unit, the degree of freedom in design can be maintained high and the number of light emitting surfaces of light emitting elements necessary for suppressing luminance unevenness can be reduced. The image projection device includes an image display unit that displays a projection image, a light irradiation unit that irradiates the image display unit with irradiation light, and an irradiation optical unit that emits, as the projection image, the irradiation light in a point-of-view direction via a display unit, in which the projection image includes a first image and a second image projected on different areas of the display unit, the image display unit includes a first area (17b) for displaying the first image and a second area (17a) for displaying the second image, the light irradiation unit has a first light source unit (12b, 13b) that irradiates the first area (17b) with light and a second light source unit (12a, 13a) that irradiates the second area (17a) with light, and the longitudinal direction of the first light source unit (12b, 13b) and the longitudinal direction of the second light source unit (12a, 13a) are arranged so as to be inclined at an angle θ to each other.

## Description

### TECHNICAL FIELD

The present invention relates to an image projection device, and more particularly to an image projection device that reflects irradiation light from an image emission unit to cause the irradiation light to reach a point of view.

### BACKGROUND ART

Conventionally, an instrument panel that lights up and displays an icon has been used as a device that displays various types of information in a vehicle. With an increase in the amount of information to be displayed, it has also been proposed to incorporate an image display device into the instrument panel or to form the entire instrument panel by the image display device.

However, since an instrument panel is located below a windshield of a vehicle, it is not preferable for a passenger such as a driver to visually recognize information displayed on the instrument panel because the passenger needs to move the line of sight downward during driving. For this reason, there has also been proposed an image projection device such as a head up display (hereinafter referred to as HUD) that projects an image on a windshield to enable a passenger to read information when the passenger visually recognizes the image in front of a vehicle (see, e.g., Patent Literatures 1 and 2).

In a conventional image projection device, an image emission unit emits irradiation light including an image, the irradiation light is reflected by, e.g., a free-form surface mirror, and the irradiation light reaches the point-of-view position of a passenger so that the image is formed in the air via a display unit such as a windshield. With this configuration, the passenger can recognize that the image is displayed at an image forming position in a depth direction by the irradiation light having reached the point of view.

In order to provide more information, it has also been proposed to project a plurality of images on a windshield using a driving assistance HUD device. However, in order to project and form the plurality of images as virtual images at different distances, it is necessary to provide a plurality of image emission units and a plurality of projection optical systems, and there is a problem that the degree of freedom in design is low in order to house these components in an instrument panel. Thus, the applicant of the present application has proposed an image projection device that achieves space saving by displaying a plurality of images in one image emission unit and splitting the optical path of each image by a light splitting unit such as a prism.

### CITATION LIST

### PATENT LITERATURE

Patent Literature 1: JP-A-2019-119248
Patent Literature 2: JP-A-2019-119262

### SUMMARY OF INVENTION

### PROBLEMS TO BE SOLVED BY INVENTION

When a plurality of images is projected at different distances, different surface areas of a windshield are irradiated with the images, and for this reason, the projected virtual images are affected by a surface shape of the windshield and a curvature of a free-form surface mirror. Normally, a windshield has a curved shape in an area near a lower end, and is formed substantially symmetrically in the left-right direction of a vehicle. Moreover, a passenger is on a driver seat or passenger seat of a vehicle, and in order to project an image toward the passenger, it is necessary to irradiate one of the left and right of the windshield with irradiation light. For these reasons, there is a problem that the image reflected near the lower end of the windshield and the image reflected at the center are distorted differently.

When a downlight type backlight liquid crystal display element in which light emitting surfaces of light emitting elements are arranged on the back side of a display surface is used as an image emission unit, the visibility of a projected image can be improved, but there is a problem that the light emitting surfaces of the light emitting elements necessary for suppressing the luminance unevenness of the image increase.

For this reason, the present invention has been made in view of the above-described problems, and is intended to provide an image projection device configured so that even when a plurality of images is emitted to different areas of a display unit, the degree of freedom in design can be maintained high and the number of light emitting surfaces of light emitting elements necessary for suppressing luminance unevenness can be reduced.

### SOLUTION TO PROBLEMS

In order to solve the above-described problems, the image projection device of the present invention is an image projection device for projecting a projection image on a display unit that displays a virtual image, the image projection device including an image display unit that displays the projection image, a light irradiation unit that irradiates the image display unit with irradiation light, and an irradiation optical unit that emits, as the projection image, the irradiation light in a point-of-view direction via the display unit, in which the projection image includes a first image and a second image projected on different areas of the display unit, the image display unit includes a first area for displaying the first image and a second area for displaying the second image, the light irradiation unit has a first light source unit that irradiates the first area with light and a second light source unit that irradiates the second area with light, and the longitudinal direction of the first light source unit and the longitudinal direction of the second light source unit are arranged so as to be inclined at an angle θ to each other.

In such an image projection device of the present invention, the light irradiation unit includes the first light source unit and the second light source unit and the longitudinal directions of the first light source unit and the second light source unit are arranged so as to be inclined at the angle θ, and therefore, the first area and the second area can be appropriately irradiated with light. As a result, even when a plurality of images is emitted to different areas of the display unit, the degree of freedom in design can be maintained high, and the number of light emitting surfaces of light emitting elements necessary for suppressing luminance unevenness can be reduced.

In one aspect of the present invention, the first light source unit is disposed along the longitudinal direction of the first area, and the second light source unit is disposed along the longitudinal direction of the second area.

In one aspect of the present invention, in each of the first light source unit and the second light source unit, light emitting surfaces of a plurality of light emitting elements are arranged in an array.

In one aspect of the present invention, the image projection device further includes a first lens portion disposed between the first light source unit and the first area along the longitudinal direction of the first light source unit, and a second lens portion disposed between the second light source unit and the second area along the longitudinal direction of the second light source unit.

In one aspect of the present invention, the first lens portion and/or the second lens portion have a shape in which a refraction portion disposed at a center portion and reflection portions arranged on both sides of the refraction portion are extended in a predetermined direction.

In one aspect of the present invention, the angle θ is in a range of 0.28 to 45 degrees.

In one aspect of the present invention, an image forming position is different between a virtual image of the first image and a virtual image of the second image.

### EFFECTS OF INVENTION

The present invention can provide the image projection device configured so that even when the plurality of images is emitted to the different areas of the display unit, the degree of freedom in design can be maintained high and the number of light emitting surfaces of the light emitting elements necessary for suppressing the luminance unevenness can be reduced.

### BRIEF DESCRIPTION OF DRAWINGS

Fig. 1 is a schematic diagram illustrating the configuration of an image projection device according to a first embodiment;
Fig. 2 is a schematic sectional view illustrating a structure example of an image emission unit 10;
Fig. 3 illustrates schematic plan views of a structure example of the image emission unit 10, Fig. 3(a) schematically illustrating the structure of a light source unit and Fig. 3(b) schematically illustrating the structure of an image display unit;
Fig. 4 illustrates photographs of the state of a formed virtual image 40, Fig. 4(a) illustrating a case where a first light source unit and a second light source unit are arranged in parallel and Fig. 4(b) illustrating a case where the first light source unit and the second light source unit are arranged so as to be inclined at an angle θ;
Fig. 5 is a schematic plan view illustrating a structure example of a light source unit according to a second embodiment;
Fig. 6 is a schematic plan view illustrating a structure example of a light source unit according to a third embodiment; and
Fig. 7 illustrates schematic plan views of a structure example of the light source unit according to the third embodiment, Fig. 7(a) illustrating an example where a plurality of light emitting surfaces of light emitting elements is arranged in a zigzag manner and Fig. 7(b) illustrating an example where a plurality of light emitting surfaces of light emitting elements is arranged in a zigzag manner along a curved line.

### DESCRIPTION OF EMBODIMENTS

### (First Embodiment)

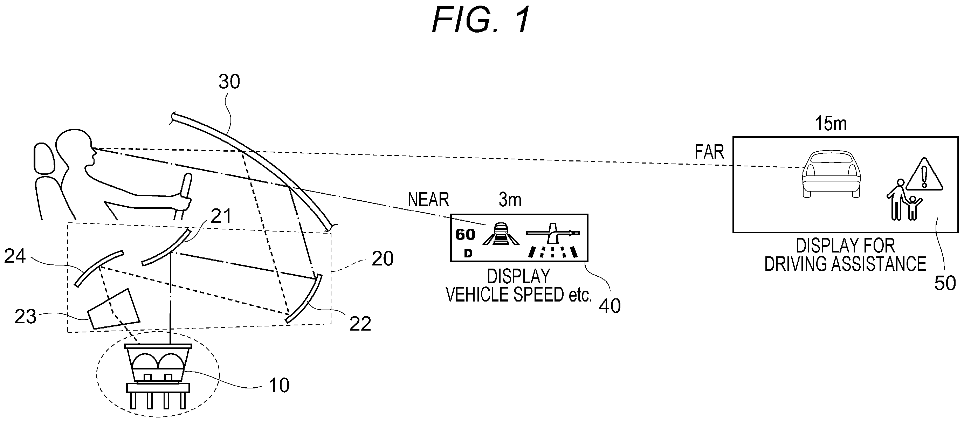

Hereinafter, an embodiment of the present invention will be described in detail with reference to the drawings. The same or equivalent components, members, and processes illustrated in the drawings are denoted by the same reference numerals, and overlap description thereof will be omitted as necessary. Fig. 1 is a schematic diagram illustrating the configuration of an image projection device according to the embodiment.

As illustrated in Fig. 1, the image projection device includes an image emission unit 10 and an irradiation optical unit 20. In addition, the image projection device includes a control unit that is connected to communicate information with each unit and controls each unit (not illustrated). The configuration of the control unit is not limited, and examples thereof include a central processing unit (CPU) for performing information processing and one including, e.g. a memory device, a recording medium, or an information communication device. The control unit controls operation of each unit according to a predetermined program, and sends information (image information) including an image to the image emission unit 10.

The image emission unit 10 is a device that emits, in response to a supply of a signal including image information on a projection image from an information processing unit (not illustrated), irradiation light (image light) including the image information. Here, the projection image includes a first image and a second image projected via different regions of a windshield 30. The irradiation light emitted from the image emission unit 10 enters the irradiation optical unit 20. In addition, the image emission unit 10 can use a liquid crystal display device that irradiates the projection image displayed on an image display unit with light from a light source unit (backlight).

The irradiation optical unit 20 is an optical system member that emits, as the projection image, the irradiation light including the image information and emitted from the image emission unit 10 in a point-of-view direction via the windshield 30. In the example illustrated in Fig. 1, the irradiation optical unit 20 includes a free-form surface mirror 21, a free-form surface mirror 22, a light splitting unit 23, and a free-form surface mirror 24. A combination of the free-form surface mirror 21 and the free-form surface mirror 22 and a combination of the light splitting unit 23, the free-form surface mirror 24, and the free-form surface mirror 22 form a first optical unit and a second optical unit in the present invention, respectively. In the first optical unit and the second optical unit, a convex lens or a concave lens may be disposed as necessary to enlarge or reduce a light diameter. The arrangement and orientation of the free-form surface mirror 21, the free-form surface mirror 22, the light splitting unit 23, and the free-form surface mirror 24 are not limited to those illustrated in Fig. 1.

The windshield 30 is a component provided in front of a driver's seat of a vehicle and allowing visible light to transmit therethrough. The windshield 30 reflects, on the surface inside the vehicle, first image light and second image light having entered from the free-form surface mirror 22 in the point-of-view direction, and allows light from the outside of the vehicle to transmit therethrough in the point-of-view direction. Thus, the windshield 30 is equivalent to a display unit in the present invention. Although the example where the windshield 30 is used as the display unit has been described here, a combiner may be prepared as a display unit separately from the windshield 30, and the light from the free-form surface mirror 22 may be reflected in the point-of-view direction. In addition, the windshield 30 is not limited to one located in front of the vehicle, and may be disposed at the side or back as long as an image is projected with respect to the point of view of a passenger.

Virtual images 40, 50 are images displayed as if these images are formed in the air when the first image light and the second image light reflected by the windshield 30 reach the point of view (eye box) of, e.g., the passenger. Positions at which the virtual images 40, 50 are formed are determined by a divergence angle when the light emitted from the image emission unit 10 travels in the point-of-view direction after having been reflected by the free-form surface mirror 21, the free-form surface mirrors 22, 24, and the windshield. The virtual images 40, 50 in the example illustrated in Fig. 1 are equivalent to the first image and the second image in the present invention, respectively.

The free-form surface mirror 21 is an optical member into which the first image light emitted from the image emission unit 10 enters and which reflects the first image light toward the free-form surface mirror 22. In the example illustrated in Fig. 1, a convex mirror is illustrated as the free-form surface mirror 21, but an optically-designed mirror necessary for projecting the first image light as the virtual image can be used, and as necessary, e.g., a concave mirror, a flat mirror, or a free-form surface mirror can be used. Alternatively, the free-form surface mirror 21 may be omitted, and the first image light from the image emission unit 10 may directly enter the free-form surface mirror 22.

The free-form surface mirror 22 is a concave mirror into which the first image light reflected by the free-form surface mirror 21 and the second image light reflected by the free-form surface mirror 24 enter and which reflects the first image light and the second image light toward the windshield 30. A reflecting surface of the free-form surface mirror 22 is designed to enlarge the light diameter in the point-of-view direction of the passenger in order to project the first image light and the second image light as the virtual images via the windshield 30. Here, enlarging the light diameter in the point-of-view direction includes not only a case where the light diameter is consistently enlarged after reflection, but also a case where the light diameter is reduced, an image is formed at an intermediate point, and then the light diameter is enlarged.

The light splitting unit 23 is an optical member that splits the light of the image emitted from the image emission unit 10, and splits the irradiation light for forming at least the virtual image 40 as the first image light and splits the irradiation light for forming the virtual image 50 as the second image light. The structure of the light splitting unit 23 is not limited as long as the light splitting unit 23 is the optical member that splits light, and, e.g., a prism may be used or a technique of making the incident angle and reflection angle of light different by a reflecting mirror may be used. In the example illustrated in Fig. 1, the prism is used as the light splitting unit 23, and is disposed so as to overlap with part of the image emission unit 10.

Here, disposing the light splitting unit 23 so as to overlap with the image emission unit 10 means that an area where the light splitting unit 23 is disposed overlaps with an image display area of the image emission unit 10 in plan view. In addition, both a case where the light splitting unit 23 and the image emission unit 10 are in contact with each other and a case where the light splitting unit 23 and the image emission unit 10 are not in contact with each other are included in the overlapping disposing. Further, a case where an optical member that allows light to transmit between the light splitting unit 23 and the image emission unit 10 or a holding member that maintains a distance between the light splitting unit 23 and the image emission unit 10 is interposed between the light splitting unit 23 and the image emission unit 10 is also included in the overlapping disposing.

The free-form surface mirror 24 is an optical member into which the second image light split by the light splitting unit 23 enters and which reflects the second image light toward the free-form surface mirror 22. In the example illustrated in Fig. 1, a concave mirror is illustrated as the free-form surface mirror 24, but an optically-designed mirror necessary for projecting the second image light as the virtual image can be used, and as necessary, e.g., a convex mirror, a flat mirror, or a free-form surface mirror can be used.

As illustrated in Fig. 1, in the image projection device of the present embodiment, the irradiation light emitted from the image emission unit 10 is split into the first image light and the second image light by the light splitting unit 23. An alternate long and short dash line and a broken line in Fig. 1 schematically indicate the optical paths of the first image light and the second image light, respectively. The alternate long and short dash line and the broken line in Fig. 1 indicate extended lines in the incident direction of the first image light and the second image light from the point-of-view position of the passenger, respectively.

The first image light having entered the free-form surface mirror 21 is reflected by the free-form surface mirror 22 and the windshield 30, and then, reaches the point-of-view position. At this time, the passenger visually recognizes the virtual image 40 formed outside the windshield 30 on the extended line in the incident direction of the first image light. The second image light split by the light splitting unit 23 is reflected by the free-form surface mirror 24, the free-form surface mirror 22, and the windshield 30, and then, reaches the point-of-view position. At this time, the passenger visually recognizes the virtual image 50 formed outside the windshield 30 on the extended line in the incident direction of the second image light.

In the example illustrated in Fig. 1, the first image light is emitted to the vicinity of the lower end of the windshield 30, and the second image light is emitted to the vicinity of the center of the windshield 30. Since the light diameters of the first image light and the second image light are enlarged by the first optical unit and the second optical unit and such light reaches the point of view, the passenger visually recognizes that the virtual images of the first image and the second image formed from the first image light and the second image light are formed at predetermined distances. Here, as for the positions of the virtual images 40, 50, the virtual image 40 is closer to the point-of-view position than the virtual image 50.

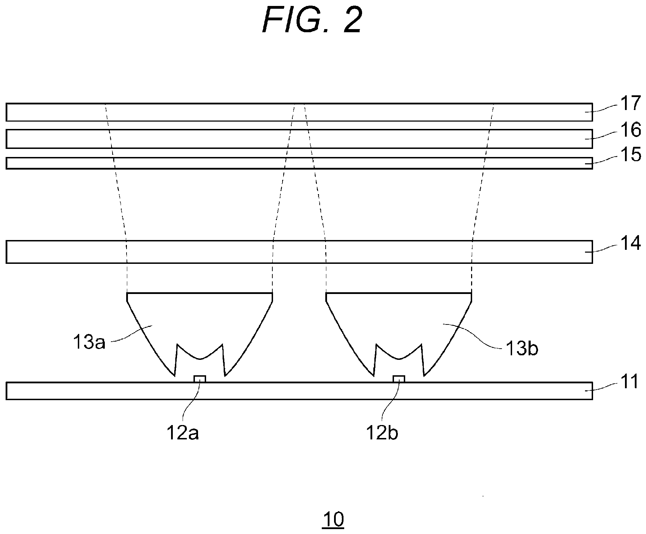

Fig. 2 is a schematic sectional view illustrating a structure example of the image emission unit 10. As illustrated in Fig. 2, the image emission unit 10 includes a substrate 11, light emitting surfaces 12a, 12b of light emitting elements, lens portions 13a, 13b, a common lens 14, a light shielding plate 15, a diffusion plate 16, and an image display unit 17.

The substrate 11 is a substantially plate-shaped member on which the light emitting surfaces 12a, 12b of the light emitting elements are mounted and held. Although not illustrated in Fig. 1, a wiring pattern is formed on the surface of the substrate 11, and the light emitting surfaces 12a, 12b of the plurality of light emitting elements are electrically connected to the wiring pattern. In addition, a drive circuit that supplies current to the light emitting surfaces 12a, 12b of the light emitting elements to drive and control light emission may be formed on the substrate 11. Further, the control unit that controls each unit of the image projection device may be mounted on the substrate 11.

The light emitting surface 12a, 12b of the light emitting element is a light emitting surface of an electronic component that is mounted on the substrate 11 and emits the irradiation light. Here, the light emitting surface 12a, 12b of the light emitting element indicates a portion that emits light in an electronic component that emits light, and does not necessarily coincide with the position of the electronic component itself. A specific configuration of the light emitting surface 12a, 12b of the light emitting element is not limited, but a light emitting surface of a light emitting diode (LED) is preferably used. The light emitted from the light emitting surface 12a, 12b of the light emitting element is preferably white, but one that emits light in a single color such as blue, green, or red may be used. The plurality of light emitting surfaces 12a, 12b of the light emitting elements is arranged in an array along the direction of the plane of paper of Fig. 2 as described later.

The lens portion 13a, 13b is an optical member into which the light emitted from the light emitting surface 12a, 12b of the light emitting element enters via an incident portion and which refracts or reflects the light and emits the light via an emission portion. In the example illustrated in Fig. 2, as the lens portions 13a, 13b, an example of a total internal reflection lens (TIR lens) including a refraction portion disposed at a central portion and reflection portions arranged on both sides of the refraction portion is illustrated. In addition, the lens portion 13a, 13b has a shape extended in the direction of the plane of paper of Fig. 2 as described later, and the incident portions are arranged so as to face the light emitting surfaces 12a, 12b of the light emitting elements along the array of the light emitting surfaces 12a, 12b of the light emitting elements.

The common lens 14 is an optical member that refracts the light emitted from the emission portions of the lens portions 13a, 13b and emits the light to a predetermined area of the image display unit 17. The structure of the common lens 14 is not limited, but it is preferable to enlarge and emit light in the left-right direction in Fig. 2, and a concave lens or a lenticular lens can be used.

A combination of the light emitting surfaces 12a, 12b of the light emitting elements, the lens portions 13a, 13b, and the common lens 14 illustrated in Fig. 2 forms a light irradiation unit that irradiates the image display unit 17 with the irradiation light. In addition, the light emitting surfaces 12a, 12b of the plurality of light emitting elements arranged in an array are equivalent to a second light source unit and a first light source unit in the present invention, respectively. Further, the lens portions 13a, 13b are equivalent to a second lens portion and a first lens portion in the present invention, respectively.

The light shielding plate 15 is a member that is disposed between the image display unit 17 and the light emitting surfaces 12a, 12b of the light emitting elements and limits an area where the light emitted from the light emitting surfaces 12a, 12b of the light emitting elements enters the image display unit 17. As described later, the light shielding plate 15 is provided with a light transmitting portion for determining a first area and a second area, and the light transmitting portion allows light to transmit therethrough, but the other areas are formed using a light shielding material to block light. Here, the light transmitting portion may be an opening formed in the light shielding plate 15, or may be a translucent portion provided with no light shielding material.

The diffusion plate 16 is a member that diffuses or scatters the light having passed through the light transmitting portion of the light shielding plate 15. The material and structure of the diffusion plate 16 are not limited, and a plate-shaped or film-shaped member made of a translucent resin material can be used and, e.g., a structure in which a surface is roughened can be used. With use of the diffusion plate 16, the directivity of the transmitted light can be reduced and the visibility thereof can be improved.

The image display unit 17 is a unit that displays a projection image in accordance with an image signal from the control unit. The projection image displayed on the image display unit 17 is irradiated with the light from the light emitting surfaces 12a, 12b of the light emitting elements as backlights, whereby the first image light and the second image light are emitted from the image emission unit 10. A specific configuration of the image display unit 17 is not limited, but, e.g., a transmissive liquid crystal display device can be used.

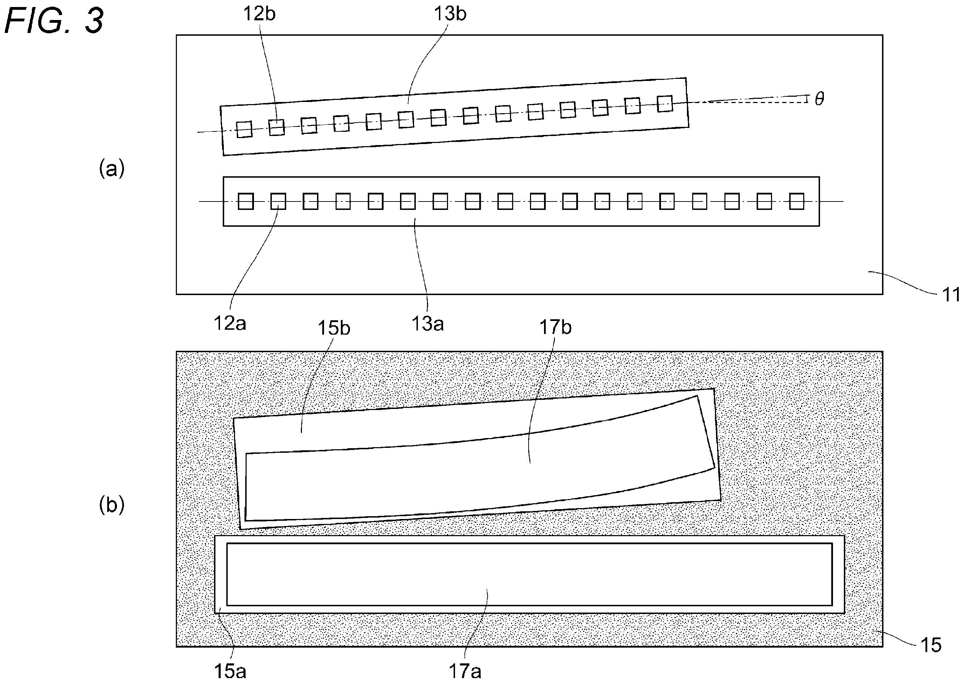

Fig. 3 illustrates schematic plan views of a structure example of the image emission unit 10, Fig. 3(a) schematically illustrating the structure of the light source unit and Fig. 3(b) schematically illustrating the structure of the image display unit. As illustrated in Fig. 3(a), the light emitting surfaces 12a, 12b of the plurality of light emitting elements are arranged in an array on the substrate 11. Alternate long and short dash lines illustrated in Fig. 3(a) are lines connecting the centers of the light emitting surfaces 12a, 12b of the light emitting elements, and indicate the longitudinal directions of the arrays of the light emitting surfaces 12a, 12b of the light emitting elements (longitudinal directions of the second light source unit and the first light source unit). The lens portions 13a, 13b are arranged along the longitudinal directions of the arrays of the light emitting surfaces 12a, 12b of the light emitting elements, respectively. The longitudinal direction of the array of the light emitting surfaces 12a of the light emitting elements and the longitudinal direction of the array of the light emitting surfaces 12b of the light emitting elements are arranged so as to be inclined at an angle θ to each other.

Here, the angle θ is preferably in a range of 0.28 to 45 degrees. In a case where θ is less than 0.28 degrees, it is difficult to emit light in accordance with the inclinations of the first area and the second area described later. In a case where θ is greater than 45 degrees, the area of the substrate 11 required for mounting the light emitting surfaces 12a, 12b of the light emitting elements increases, which leads to a difficulty in size reduction.

As illustrated in Fig. 3(b), the image display unit 17 includes, in the display surface thereof, a first area 17b for displaying the first image and a second area 17a for displaying the second image. In the example illustrated in Fig. 3(b), the first area 17b has a shape which compensates for distortion caused by the curvatures of the irradiation optical unit 20 and the windshield 30. As illustrated in Fig. 1, since the irradiation positions and angles of the first image light and the second image light in the windshield 30 are different, the first area 17b and the second area 17a are also inclined at the angle θ to each other. The light shielding plate 15 is provided with light transmitting portions 15b, 15a so as to include the first area 17b and the second area 17a therein.

As illustrated in Figs. 2 and 3, the light emitting surfaces 12b of the light emitting elements arranged in an array as the first light source unit are arranged along the longitudinal direction of the first area 17b. Moreover, the light emitting surfaces 12a of the light emitting elements arranged in an array as the second light source unit are arranged along the longitudinal direction of the second area 17a. Thus, the light emitting surfaces 12b, 12a of the light emitting elements irradiate the first area 17b and the second area 17a with light, respectively. Here, the longitudinal directions of the first area 17b and the second area 17a mean the direction of tangent to the center line of each area or a linear direction approximate to the center line. As an example, the center line of the array of the light emitting surfaces 12b of the light emitting elements overlaps with the approximate straight line of the center line of the first area 17b.

The light emitted from the light emitting surfaces 12b of the light emitting elements arranged in an array passes through the lens portion 13b, the common lens 14, the light transmitting portion 15b, and the diffusion plate 16, and enters the first area 17b. Accordingly, the first image displayed in the first area 17b is emitted as the first image light from the image emission unit 10 to the free-form surface mirror 21, and is reflected by the free-form surface mirror 22 and the windshield 30 to form the virtual image 40.

The light emitted from the light emitting surfaces 12a of the light emitting elements arranged in an array passes through the lens portion 13a, the common lens 14, the light transmitting portion 15a, and the diffusion plate 16, and enters the second area 17a. Accordingly, the second image displayed in the second area 17a is emitted as the second image light from the image emission unit 10, is split by the light splitting unit 23, and is reflected by the free-form surface mirror 24, the free-form surface mirror 22, and the windshield 30 to form the virtual image 50.

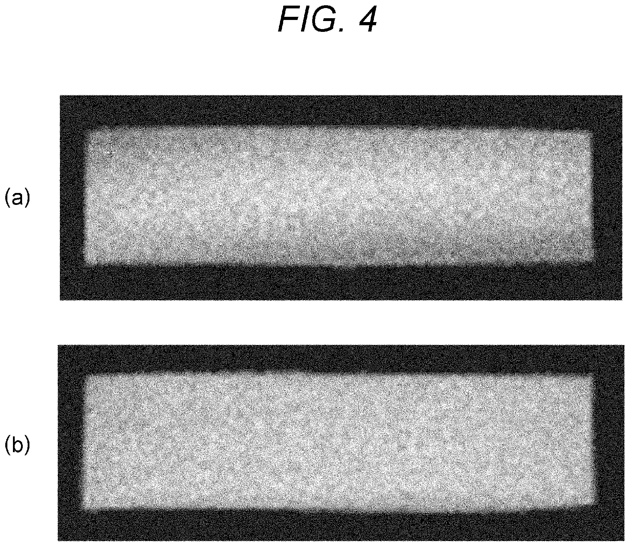

Fig. 4 illustrates photographs of the state of the formed virtual image 40, Fig. 4(a) illustrating a case where the first light source unit and the second light source unit are arranged in parallel and Fig. 4(b) illustrating a case where the first light source unit and the second light source unit are arranged so as to be inclined at the angle θ. As illustrated in Fig. 4(a), when the array of the light emitting surfaces 12b of the light emitting elements as the first light source unit is parallel to the array of the light emitting surfaces 12a of the light emitting elements as the second light source unit, the relative inclinations of the first area 17b and the second area 17a do not coincide with the arrays of the light emitting surfaces 12b, 12a of the light emitting elements, and therefore, luminance unevenness is obliquely caused in the formed virtual image 40. In order to reduce the luminance unevenness when the light emitting surfaces 12b of the light emitting elements and the light emitting surfaces 12a of the light emitting elements are arranged in parallel, it is necessary to arrange the light emitting surfaces 12b of the light emitting elements in an array with a plurality of lines or a matrix, and the number of elements necessary for suppressing the luminance unevenness increases.

On the other hand, as illustrated in Fig. 4(b), when the array of the light emitting surfaces 12b of the light emitting elements as the first light source unit is arranged so as to be inclined with respect to the array of the light emitting surfaces 12a of the light emitting elements as the second light source unit at the angle θ, the relative inclinations of the first area 17b and the second area 17a coincide with the arrays of the light emitting surfaces 12b, 12a of the light emitting elements, and therefore, the formed virtual image 40 is displayed as a uniform image without generating the luminance unevenness. Thus, even if the distortion-compensated first area 17b is provided so as to be inclined with respect to the second area 17a, the luminance unevenness can be reduced and the number of necessary elements can be reduced only by arranging the light emitting surfaces 12b of the light emitting elements in an array with one line.

As described above, in the image projection device of the present embodiment, the arrays of the light emitting surfaces 12b, 12a of the light emitting elements are arranged so as to be inclined at the angle θ to each other, so that the first area 17b and the second area 17a can be appropriately irradiated with light. As a result, even when a plurality of images is emitted to different areas of the windshield 30, the degree of freedom in design can be maintained high, and the number of light emitting surfaces of the light emitting elements necessary for suppressing the luminance unevenness can be reduced.

### (Second Embodiment)

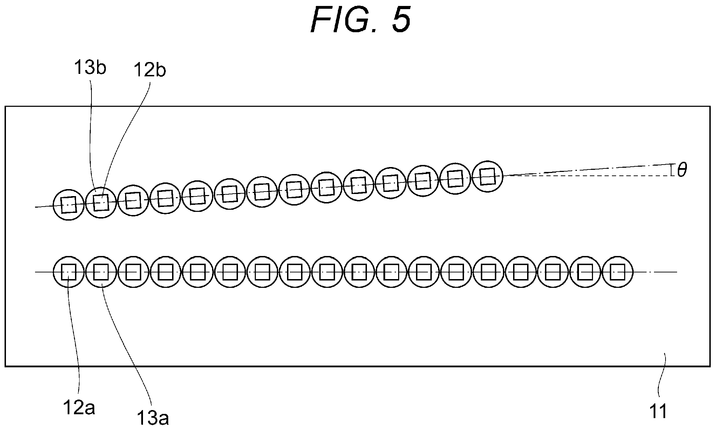

Next, a second embodiment of the present invention will be described with reference to Fig. 5. Description of contents overlapping with those of the first embodiment will be omitted. Fig. 5 is a schematic plan view illustrating a structure example of a light source unit according to the present embodiment. The present embodiment is different from the first embodiment in that a plurality of lenses is used as the lens portions 13a, 13b.

As illustrated in Fig. 5, the light emitting surfaces 12a, 12b of the plurality of light emitting elements are arranged in an array on the substrate 11. The longitudinal direction of the array of the light emitting surfaces 12a of the light emitting elements and the longitudinal direction of the array of the light emitting surfaces 12b of the light emitting elements are arranged so as to be inclined at an angle θ to each other. The lens portions 13a, 13b are configured such that a plurality of individual lenses formed in a circular shape in plan view is arranged, and are arranged such that the centers of the individual lenses overlap with the centers of the light emitting surfaces 12a, 12b of the light emitting elements. Thus, lines connecting the centers of the individual lenses are arranged along the longitudinal directions of the arrays of the light emitting surfaces 12a, 12b of the light emitting elements.

Also in the present embodiment, the arrays of the light emitting surfaces 12b, 12a of the light emitting elements are arranged so as to be inclined at the angle θ to each other, so that the first area 17b and the second area 17a can be appropriately irradiated with light. As a result, even when a plurality of images is emitted to different areas of the windshield 30, the degree of freedom in design can be maintained high, and the number of light emitting surfaces of the light emitting elements necessary for suppressing the luminance unevenness can be reduced.

### (Third Embodiment)

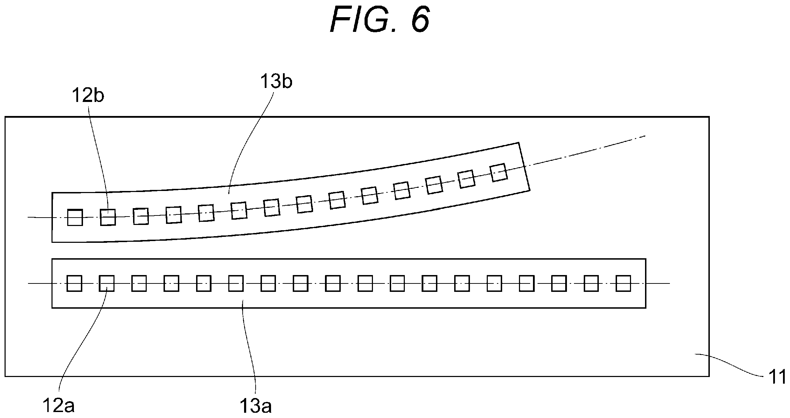

Next, a third embodiment of the present invention will be described with reference to Fig. 6. Description of contents overlapping with those of the first embodiment will be omitted. Fig. 6 is a schematic plan view illustrating a structure example of a light source unit according to the present embodiment. The present embodiment is different from the first embodiment in that the array of the light emitting surfaces 12b of the light emitting elements and the lens portion 13b are formed so as to be curved in plan view.

As illustrated in Fig. 6, the light emitting surfaces 12a, 12b of the plurality of light emitting elements are arranged in an array on the substrate 11. In addition, as indicated by an alternate long and short dash line in the figure, the longitudinal direction connecting the centers of the light emitting surfaces 12b of the light emitting elements is curved. The longitudinal direction of the array of the light emitting surfaces 12b of the light emitting elements is inclined with respect to the array of the light emitting surfaces 12a of the light emitting elements at the angle θ. Here, the curved longitudinal direction being inclined at the angle θ means that a straight line approximate to the curved longitudinal direction or a tangent to the longitudinal direction, specifically, a tangent to the center of the light emitting surfaces 12b of the plurality of light emitting elements, is inclined at the angle θ with respect to the longitudinal direction of the array of the light emitting surfaces 12a of the light emitting elements. Similarly, the longitudinal direction of the lens portion 13b is arranged so as to be inclined at the angle θ with respect to the longitudinal direction of the lens portion 13a.

It is preferable that the array of the light emitting surfaces 12b of the light emitting elements and the center line of the lens portion 13b as illustrated in Fig. 6 substantially coincide with the center line of the first area 17b illustrated in Fig. 3(b). Since the center lines of the light emitting surfaces 12b of the light emitting elements, the lens portion 13b, and the first area 17b substantially coincide with each other, the light emitted from the light emitting surfaces 12b of the light emitting elements is more uniformly emitted to the first area 17b, and the luminance unevenness can be suppressed while the number of elements of the light emitting surfaces 12b of the light emitting elements is reduced.

### (Fourth Embodiment)

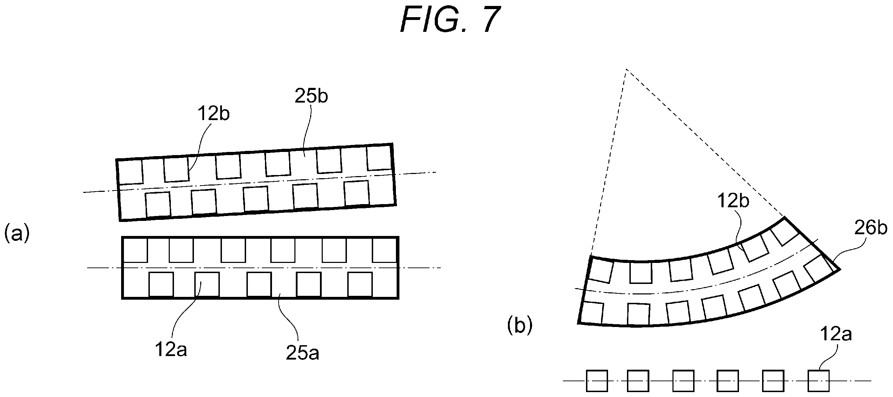

Next, a fourth embodiment of the present invention will be described with reference to Fig. 7. Description of contents overlapping with those of the first embodiment will be omitted. Fig. 7 illustrates schematic plan views of a structure example of a light source unit according to the present embodiment, Fig. 7(a) illustrating an example where a plurality of light emitting surfaces of light emitting elements is arranged in a zigzag manner and Fig. 7(b) illustrating an example where a plurality of light emitting surfaces of light emitting elements is arranged in a zigzag manner along a curved line. As illustrated in Figs. 7(a) and 7(b), in the present embodiment, the light emitting surfaces 12a, 12b of the plurality of light emitting elements are arranged in a zigzag manner to form light emitting element groups 25a, 25b, 26b, and these groups are equivalent to a second light source unit and a first light source unit in the present invention.

The light emitting element groups 25a, 25b, 26b are areas connecting the outer peripheries of the light emitting surfaces 12a, 12b of the plurality of light emitting elements included therein, and have a substantially rectangular shape in the example illustrated in Fig. 7(a) and have a fan shape sandwiched between two arcs in the example illustrated in Fig. 7(b). In addition, the light emitting element groups 25a, 25b, 26b include the light emitting surfaces 12a, 12b of the plurality of light emitting elements, and in the examples illustrated in Figs. 7(a) and 7(b), the light emitting surfaces 12a, 12b of the light emitting elements are alternately arranged in a zigzag manner along the center line of each of the light emitting element groups 25a, 25b, 26b in the longitudinal direction thereof. Further, the center lines of the light emitting element groups 25a, 25b, 26b substantially coincide with the center lines of the lens portions 13a, 13b.

Also in the present embodiment, since the center line of the light emitting element group 25a substantially coincides with the center lines of the lens portion 13b and the first area 17b, the light emitted from the light emitting surfaces 12b of the light emitting elements is more uniformly emitted to the first area 17b, and the luminance unevenness can be suppressed while the number of elements of the light emitting surfaces 12b of the light emitting elements is reduced.

The present invention is not limited to each of the above-described embodiments, and various changes can be made within the scope of the claims, and embodiments obtained by appropriately combining techniques disclosed in different embodiments are also included in the technical scope of the present invention.

The present international application claims priority based on Japanese Patent Application No. 2022-041945 filed on March 16, 2022, and the entire contents of Japanese Patent Application No. 2022-041945 are incorporated herein by reference.

The description of the specific embodiments of the present invention is presented for the purpose of illustration. The specific embodiments are not intended to be exhaustive or to limit the invention as it is in the form described. It is obvious to those skilled in the art that many modifications and alterations are possible in light of the contents of the description above.

### LIST OF REFERENCE SIGNS

10 Image Emission Unit
20 Irradiation Optical Unit
30 Windshield
40, 50 Virtual Image
11 Substrate
12a, 12b Light Emitting Surface of Light Emitting Element
13a, 13bLens Portion
14 Common Lens
15 Light Shielding Plate
15a, 15b Light Transmitting Portion
16 Diffusion Plate
17 Image Display Unit
17a Second Area
17b First Area
21, 22, 24 Free-Form Surface Mirror
23 Light Splitting Unit
25a, 25b, 26b Light Emitting Element Group

## Claims

1. An image projection device for projecting a projection image on a display unit that displays a virtual image, comprising:
an image display unit that displays the projection image;
a light irradiation unit that irradiates the image display unit with irradiation light; and
an irradiation optical unit that emits, as the projection image, the irradiation light in a point-of-view direction via the display unit,
wherein the projection image includes a first image and a second image projected on different areas of the display unit,
the image display unit includes a first area for displaying the first image and a second area for displaying the second image,
the light irradiation unit has a first light source unit that irradiates the first area with light and a second light source unit that irradiates the second area with light, and
a longitudinal direction of the first light source unit and a longitudinal direction of the second light source unit are arranged so as to be inclined at an angle θ to each other.

2. The image projection device according to claim 1, wherein
the first light source unit is disposed along a longitudinal direction of the first area, and
the second light source unit is disposed along a longitudinal direction of the second area.

3. The image projection device according to claim 1 or 2, wherein
in each of the first light source unit and the second light source unit, light emitting surfaces of a plurality of light emitting elements are arranged in an array.

4. The image projection device according to claim 1 or 2, further comprising:
a first lens portion disposed between the first light source unit and the first area along the longitudinal direction of the first light source unit; and
a second lens portion disposed between the second light source unit and the second area along the longitudinal direction of the second light source unit.

5. The image projection device according to claim 4, wherein
the first lens portion and/or the second lens portion have a shape in which a refraction portion disposed at a center portion and reflection portions arranged on both sides of the refraction portion are extended in a predetermined direction.

6. The image projection device according to claim 1 or 2, wherein
the angle θ is in a range of 0.28 to 45 degrees.

7. The image projection device according to claim 1 or 2, wherein
an image forming position is different between a virtual image of the first image and a virtual image of the second image.
